# EUROPEAN PATENT APPLICATION

(11) **EP 4 350 967 A1**
(43) Date of publication of application: **10.04.2024**
(21) Application number: 22848864.9
(22) Date of filing: 14.02.2022
(51) Int. Cl.: H02M 7/12, H02M 3/155

(54) **CONVERTER DEVICE, AIR CONDITIONER, METHOD FOR CONTROLLING CONVERTER DEVICE, AND PROGRAM**

(30) Priority: 30.07.2021 JP 2021124964
(71) Applicant: MITSUBISHI HEAVY INDUSTRIES THERMAL SYSTEMS, LTD., Tokyo 100-8332 (JP)
(72) Inventor: SATO, Takeshi, Tokyo 100-8332 (JP); TAKADA, Junichi, Tokyo 100-8332 (JP); SHIMIZU, Kenji, Tokyo 100-8332 (JP); SUMITO, Kiyotaka, Tokyo 100-8332 (JP); KONDO, Takuma, Tokyo 100-8332 (JP); TANAKA, Naoki, Tokyo 100-8332 (JP)
(74) Representative: Cabinet Beau de Loménie
(86) International application number: PCT/JP2022/005721
(87) International publication number: WO 2023/007780

(57) **Abstract**

The converter device for converting power from an AC power source into DC power through a converter circuit comprises: a load determination unit that determines which of a low-load operation and a high-load operation the operation state is on the basis of the result of detecting current flowing through a load; a frequency determination unit that determines a switching frequency for the converter circuit in accordance with the operation state; and a region specification unit that specifies a restriction clear frequency region which is a frequency region specifying noise restrictions. The frequency determination unit determines the switching frequency to be a frequency in which a reactor loss is smallest among frequencies belonging to the restriction clear frequency region when the operation state is the high-load operation.

## Description

### Technical Field

The present disclosure relates to a converter device, an air conditioner, a method for controlling the converter device, and a program.

This application claims priority to Japanese Patent Application No. 2021-124964, filed in Japan on July 30, 2021, the contents of which are incorporated herein by reference.

### Background Art

Among the converter devices used in an air conditioner or the like, for example, there is an interleaving method using an electromagnetic steel plate reactor in order to reduce the size and weight of the boost chopper. In particular, in a case where the reactor material is an electromagnetic steel plate, it is necessary to operate at an appropriate switching frequency in consideration of its frequency characteristics.

As a technique related to the present disclosure, PTL 1 discloses a converter device that is connected between an alternating power supply and a load and that converts alternating current power from the alternating power supply into a direct current power and outputs the direct current power, the converter device includes rectifying means that converts the alternating current power input from the alternating power supply into the direct current power, smoothing means connected in parallel to the rectifying means on a direct current output side of the rectifying means, two switching circuits provided in parallel with each other between the rectifying means and the smoothing means and control means for controlling the switching circuits.

### Citation List

### Patent Literature

[PTL 1] Japanese Unexamined Patent Application Publication No. 2014-150622

### Summary of Invention

### Technical Problem

It is necessary to appropriately select a switching frequency from the need to suppress a temperature rise caused by a loss in a reactor of a converter circuit (hereinafter, also referred to as "reactor loss"). On the other hand, it is necessary to satisfy a regulation based on electromagnetic interference (EMI) (hereinafter, also referred to as "noise regulation"). From such a viewpoint, it is desired to drive the device at an optimum switching frequency.

An object of the present disclosure is to provide a converter device capable of operating a converter circuit at an optimum switching frequency from viewpoints of both a noise regulation and a reactor temperature rise, an air conditioner, a method for controlling the converter device, and a program.

### Solution to Problem

According to one aspect of the present disclosure, a converter device is a converter device that converts an electric power from an alternating power supply into a direct current power through a converter circuit and includes a load determination unit that determines whether an operation state is a low-load operation or a high-load operation based on a detection result of a current flowing through a load; a frequency determination unit that determines a switching frequency of the converter circuit according to the operation state; and a region specifying unit that specifies a regulation clear frequency region, which is a frequency region that satisfies a noise regulation. The frequency determination unit determines the switching frequency to a frequency at which a reactor loss is minimized among frequencies belonging to the regulation clear frequency region in a case where the operation state is the high-load operation.

According to one aspect of the present disclosure, a method for controlling a converter device is a method for controlling a converter device that converts an electric power from an alternating power supply into direct current power through a converter circuit and includes a step of determining whether an operation state is a low-load operation or a high-load operation based on a detection result of a current flowing through a load; a step of determining a switching frequency of the converter circuit according to the operation state; and a step of specifying a regulation clear frequency region which is a frequency region that satisfies a noise regulation. In the step of determining the switching frequency, the switching frequency is determined to a frequency at which a reactor loss is minimized among frequencies belonging to the regulation clear frequency region in a case where the operation state is the high-load operation.

According to one aspect of the present disclosure, a program causing a computer of a converter device that converts an electric power from an alternating power supply into a direct current power through a converter circuit, to execute a step of determining whether an operation state is a low-load operation or a high-load operation based on a detection result of a current flowing through a load; a step of determining a switching frequency of the converter circuit according to the operation state; and a step of specifying a regulation clear frequency region which is a frequency region that satisfies a noise regulation. In the step of determining the switching frequency, the switching frequency is determined to a frequency at which a reactor loss is minimized among frequencies belonging to the regulation clear frequency region in a case where the operation state is the high-load operation.

### Advantageous Effects of Invention

According to each of the above-described aspects, the converter circuit can be operated at an optimum switching frequency from the viewpoints of both a noise regulation and a reactor temperature rise.

### Brief Description of Drawings

Fig. 1 is a diagram illustrating a circuit configuration of an air conditioner according to the first embodiment.
Fig. 2 is a diagram illustrating a functional configuration of a converter control unit according to the first embodiment.
Fig. 3 is a diagram illustrating a processing flow of the converter control unit according to the first embodiment.
Fig. 4 is a diagram used for a detailed description of a process of the converter control unit according to the first embodiment.
Fig. 5 is a diagram used for a detailed description of the process of the converter control unit according to the first embodiment.
Fig. 6 is a diagram used for a detailed explanation of the process of the converter control unit according to the first embodiment.

### Description of Embodiments

### <First Embodiment>

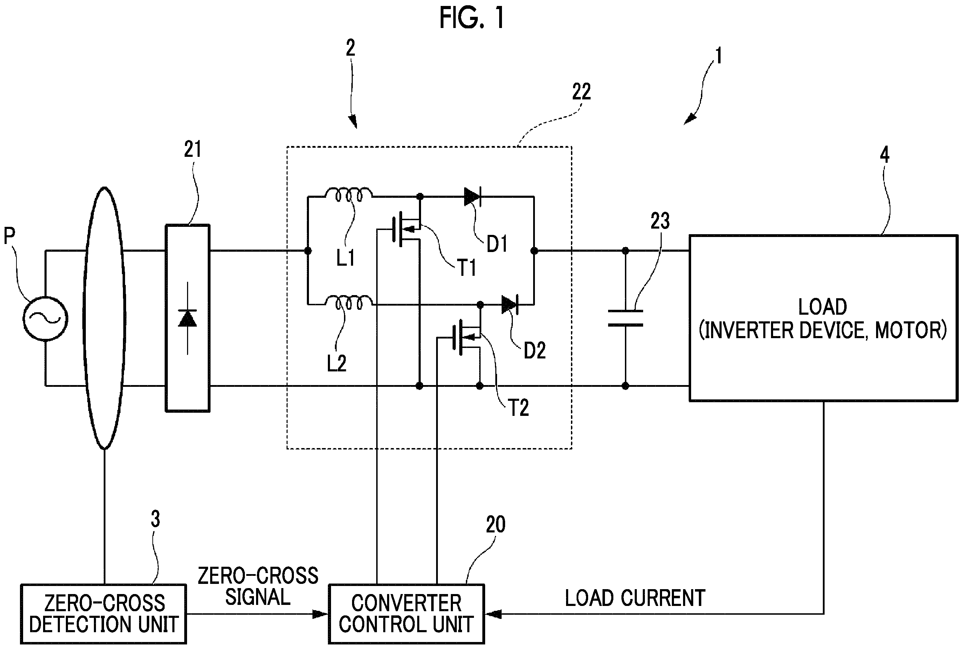

Hereinafter, a converter device and an air conditioner including the converter device according to the first embodiment will be described with reference to Figs. 1 to 6.

### (Circuit Configuration of Air Conditioner)

Fig. 1 is a diagram illustrating a circuit configuration of an air conditioner according to the first embodiment.

As illustrated in Fig. 1, the air conditioner 1 includes the converter device 2, the zero-cross detection unit 3, and the load 4. Here, the load 4 is actually an inverter device and a motor. In addition, the zero-cross detection unit 3 outputs a zero-cross signal indicating a zero-cross point of an alternating current power of the alternating power supply P.

The converter device 2 converts the alternating current power input from the alternating power supply P into a direct current power and outputs the direct current power to the load 4 (inverter device and motor). The converter device 2 includes the converter control unit 20, the rectification circuit 21, the converter circuit 22, and the smoothing capacitor 23.

The converter control unit 20 is, for example, a processor such as a micro processing unit (MPU) and operates according to a program prepared in advance. The converter control unit 20 drives the converter circuit 22 at a predetermined switching frequency with reference to the zero-cross signal. In addition, the converter control unit 20 according to the present embodiment identifies the current operation state (high-load operation or low-load operation) by referring to the load current (motor current), and drives the converter circuit 22 at the switching frequency according to the operation state. The details of a process executed by the converter control unit 20 according to the present embodiment will be described later.

The converter circuit 22 according to the present embodiment has an interleaving circuit configuration and includes reactors L1 and L2, switching elements T1 and T2, and diodes D1 and D2. In general, in the interleaving method, the switching elements T1 and T2 are switched at different phases, so that the superposition of a harmonic component on the alternating power supply P can be suppressed and a higher power-factor improving effect can be obtained.

### (Functional Configuration of Converter Control Unit)

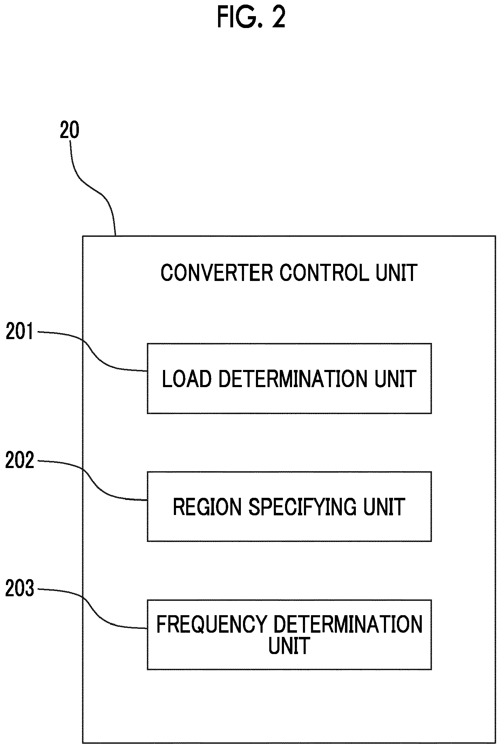

Fig. 2 is a diagram showing a functional configuration of the converter control unit according to the first embodiment.

The converter control unit 20 according to the present embodiment operates according to the program prepared in advance, and thus has functions as the load determination unit 201, the region specifying unit 202, and the frequency determination unit 203.

The load determination unit 201 determines whether the operation state of the air conditioner 1 is the low-load operation or the high-load operation, based on a detection result of the current (load current) flowing through the load 4.

The region specifying unit 202 specifies a frequency region (hereinafter, also referred to as a "regulation clear frequency region") that satisfies a noise regulation. In particular, the region specifying unit 202 according to the present embodiment specifies a regulation clear frequency region according to a magnitude of the load (a magnitude of the load current).

The frequency determination unit 203 determines an optimum switching frequency of the converter circuit 22 according to the operation state of the air conditioner 1. In particular, the frequency determination unit 203 according to the present embodiment determines the switching frequency of the converter circuit 22 to a frequency at which a sum of a reactor loss and a switching loss is minimized in a case where the operation state is the low-load operation. In addition, the frequency determination unit 203 determines the switching frequency of the converter circuit 22 to a frequency at which the reactor loss is minimized among the frequencies belonging to the regulation clear frequency region in a case where the operation state is the high-load operation.

### (Processing Flow of Converter Control Unit)

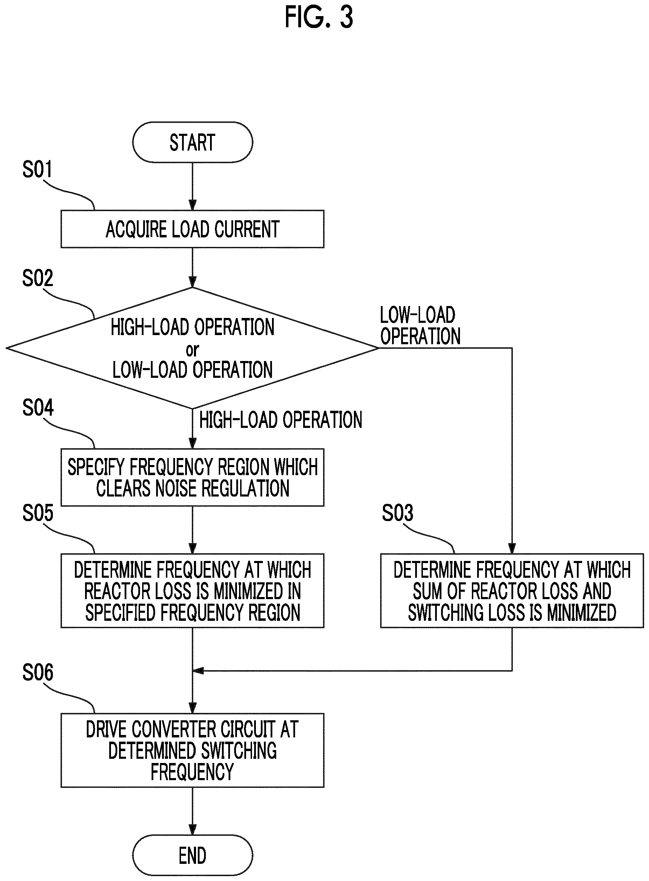

Fig. 3 is a diagram illustrating a processing flow of the converter control unit according to the first embodiment.

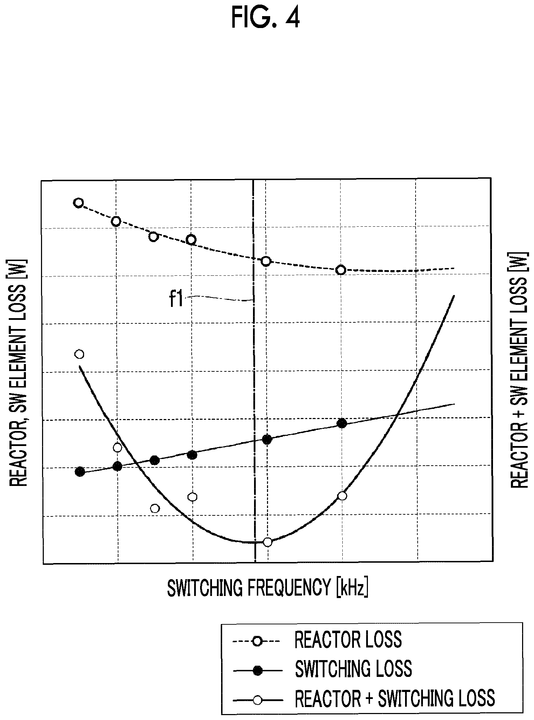

In addition, Figs. 4 to 6 are diagrams used for detailed description of the process of the converter control unit according to the first embodiment.

The processing flow illustrated in Fig. 3 is repeatedly performed during the operation of the air conditioner 1.

First, the load determination unit 201 of the converter control unit 20 acquires the detection result of the load current detected at the load 4 (step S01), and determines whether the current operation state is the high-load operation or the low-load operation (step S02). A determination process in step S02 may be, for example, a determination obtained by comparing the detection result of the load current with a predetermined threshold value.

The "high-load operation" in the operation state of the air conditioner 1 is, for example, an operation performed when the current temperature rapidly approaches a set temperature, immediately after the start of the operation. In addition, the "low-load operation" in the operation state of the air conditioner 1 is, for example, an operation performed in order for the current temperature to reach the set temperature and to maintain the state.

In a case where the operation state of the air conditioner 1 is the low-load operation (step S02; low-load operation), the frequency determination unit 203 of the converter control unit 20 determines the switching frequency to a frequency at which the sum of the reactor loss and the switching loss is minimized (step S03).

Here, the process in step S03 will be described with reference to Fig. 4.

Fig. 4 is a graph illustrating a relationship between the reactor loss (left vertical axis) and the switching frequency (horizontal axis) generated in the reactors L1 and L2, and a relationship between the switching loss (left vertical axis) and the switching frequency (horizontal axis) generated in the switching elements T1 and T2. The graph of Fig. 4 also illustrates a relationship between a sum of the reactor loss and the switching loss (right vertical axis) and the switching frequency (horizontal axis).

As illustrated in Fig. 4, in general, the switching loss increases as the switching frequency increases. On the other hand, the reactor loss tends to decrease as the switching frequency increases, but takes a minimum value at a certain frequency and then starts to increase thereafter.

Since the low-load operation occupies most of the operating time of the air conditioner 1, it is desired that the power consumption is as low as possible. On the other hand, since the load is low (the current is low), it is not easily restricted by the noise regulation. Therefore, in order to meet the above needs, during the low-load operation, a frequency at which power consumption is most suppressed, that is, a switching frequency at which the sum of the reactor loss and the switching loss is minimized (frequency f1 shown in Fig. 4) is selected.

Returning to Fig. 3, in a case where the operation state of the air conditioner 1 is the high-load operation (step S02; high-load operation), next, the region specifying unit 202 of the converter control unit 20 specifies the frequency region which clears the noise regulation (regulation clear frequency region) (step S04).

Then, the frequency determination unit 203 determines the switching frequency to a frequency at which a reactor loss is minimized among frequencies belonging to the regulation clear frequency region specified in step S04 (step S05) .

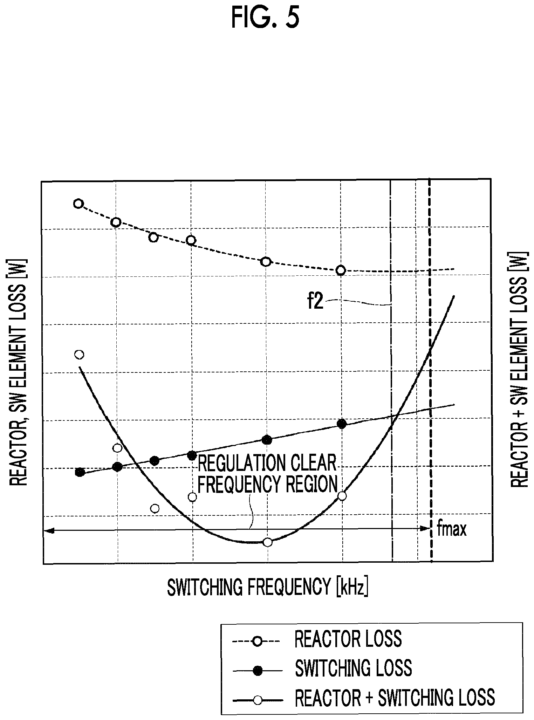

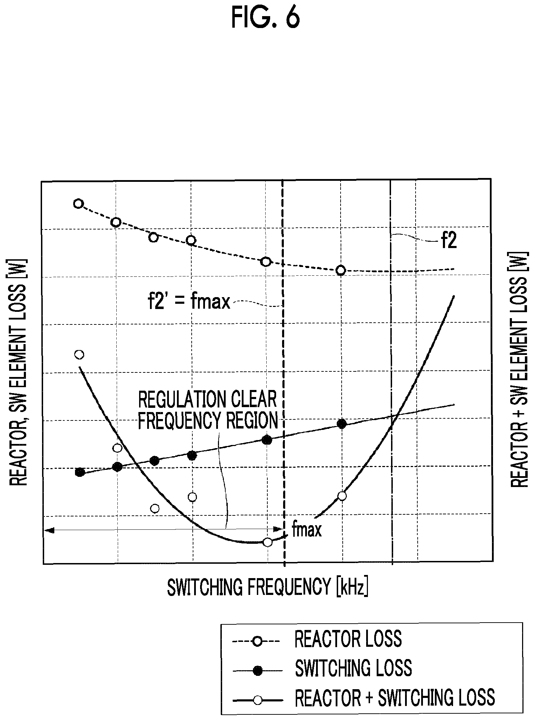

Here, the processes in step S04 and step S05 will be described in detail with reference to Figs. 5 and 6.

Figs. 5 and 6 illustrate the relationship between the reactor loss (left vertical axis) and the switching frequency (horizontal axis), the relationship between the switching loss (left vertical axis) and the switching frequency (horizontal axis), and the relationship between the sum of the reactor loss and the switching loss (right vertical axis) and the switching frequency (horizontal axis), as illustrated in Fig. 4.

Since the high-load operation is usually performed only for a short time immediately after the start of the air conditioner 1, the need for low power consumption is relatively small. However, since the operation is performed with a high load (a large current flows), a temperature rise in the reactor elements (reactors L1 and L2) may become a problem. In order to suppress the temperature rise of the reactor element, it is necessary to suppress the reactor loss as much as possible. Therefore, the frequency determination unit 203 selects the frequency from the viewpoint of minimizing the reactor loss rather than minimizing the overall power consumption.

In addition, during the high-load operation, restrictions based on the noise regulation may be applied. That is, during the high-load operation, the restriction (upper limit) occurs on the settable switching frequency in order to satisfy the noise regulation. The restriction becomes stricter as the load increases. Therefore, the region specifying unit 202 first acquires the current magnitude of the load (magnitude of the load current), and specifies a regulation clear frequency region according to the load (step S04 in Fig. 3).

For example, in a case where the load is relatively small, as illustrated in Fig. 5, the upper limit frequency fmax is increased, and as a result, the regulation clear frequency region becomes wide. On the other hand, in a case where the load is relatively large, as illustrated in Fig. 6, the upper limit frequency fmax is decreased, and as a result, the regulation clear frequency region becomes narrow.

Further, in order to minimize the temperature rise of the reactor element (that is, to minimize the reactor loss), the frequency determination unit 203 selects a frequency at which the reactor loss is minimized in the regulation clear frequency region (step S05 in Fig. 3).

For example, in the case of the example illustrated in Fig. 5, the frequency at which the reactor loss is minimized in the regulation clear frequency region is the frequency f2 at which a value of the reactor loss is minimized. Therefore, the frequency determination unit 203 determines the switching frequency to the frequency f2.

On the other hand, in the case of the example illustrated in Fig. 6, the upper limit frequency fmax is smaller than the frequency f2. Therefore, the frequency f2' at which the reactor loss is minimized in the regulation clear frequency region matches to the upper limit frequency fmax. Therefore, the frequency determination unit 203 determines the switching frequency to the frequency f2' (= fmax).

In the above process, for example, an information table showing the relationship between the magnitude of the load and the upper limit frequency fmax is prepared in advance, and the region specifying unit 202 may uniquely specify the upper limit frequency fmax (regulation clear frequency region) according to the magnitude of the load by referring the information table.

Returning to Fig. 3, the frequency determination unit 203 drives the converter circuit 22 at the switching frequency determined in step S03 or step S05 (step S06).

### (Effect of Action)

As described above, the converter device 2 (frequency determination unit 203) according to the first embodiment determines the switching frequency of the converter circuit 22 to the frequency at which the reactor loss is minimized among the frequencies belonging to the regulation clear frequency region in a case where the operation state is the high-load operation.

In this way, the converter circuit 22 can be driven at a frequency at which the temperature rise of the reactor element can be most suppressed within the given restrictions, with the highest priority given to satisfying the noise regulation.

In addition, since the converter device 2 (region specifying unit 202) according to the first embodiment specifies the regulation clear frequency region according to the magnitude of the load, the widest regulation clear frequency region can be specified for each magnitude of the load.

In addition, in a case where the operation state is the low-load operation, the converter device 2 (frequency determination unit 203) according to the first embodiment determines the switching frequency of the converter circuit 22 to the frequency at which the sum of the reactor loss and the switching loss is minimized.

By doing so, it is possible to reduce power consumption during the low-load operation.

### <Other Embodiments>

In the first embodiment, the region specifying unit 202 has been described as specifying the regulation clear frequency region according to the magnitude of the load, but the other embodiments are not limited to this aspect. For example, the region specifying unit 202 according to other embodiments may specify a uniformly defined regulation clear frequency region regardless of the magnitude of the load.

In the embodiments described above, process of various processes of the converter device 2 are stored in a computer-readable recording medium in the form of a program, and the various processes are performed by causing a computer to read and execute the program. Further, examples of the computer-readable recording medium include a magnetic disk, a magneto-optical disk, a CD-ROM, a DVD-ROM, a semiconductor memory, and the like. Further, this computer program may be transferred to a computer through a communication line, and the computer receiving the transfer may execute the program.

The program described above may be a program for implementing a part of the above-mentioned functions. Further, the program may be a program, so-called a difference file (difference program) that can implement the above-mentioned functions in combination with a program already recorded in a computer system.

As described above, although some embodiments according to the present disclosure have been described, all of these embodiments are presented as examples and are not intended to limit the scope of the invention. These embodiments can be implemented in various other forms, and various omissions, replacements, and changes can be made without departing from the gist of the invention. These embodiments and variations thereof are included in the scope of the invention described in the claims and the equivalent scope thereof, as well as in the scope and gist of the invention.

### <Additional Notes>

The converter device, the air conditioner, the method for controlling the converter device, and the program described in each embodiment are grasped as follows, for example.
(1) In the first aspect, the converter device 2 is a converter device that converts an electric power from the alternating power supply P into a direct current power through the converter circuit 22, the converter device includes the load determination unit 201 that determines whether an operation state is a low-load operation or a high-load operation, based on a detection result of a current flowing through the load 4, the frequency determination unit 203 that determines a switching frequency of the converter circuit 22 according to the operation state, and the region specifying unit 202 that specifies a regulation clear frequency region, which is a frequency region that satisfies a noise regulation, in which the frequency determination unit 203 determines the switching frequency to a frequency at which a reactor loss is minimized among frequencies belonging to the regulation clear frequency region in a case where the operation state is the high-load operation.
(2) In a second aspect, the frequency determination unit 203 determines the switching frequency to a frequency at which a sum of the reactor loss and a switching loss is minimized in a case where the operation state is low-load operation.
(3) In a third aspect, the region specifying unit 202 specifies the regulation clear frequency region according to a magnitude of the load.
(4) In a fourth aspect, the air conditioner 1 includes the converter device 2 described above.
(5) In a fifth aspect, a method for controlling the converter device 2 is a method for controlling the converter device that converts an electric power from an alternating power supply into a direct current power through a converter circuit, and the method includes a step of determining whether an operation state is a low-load operation or a high-load operation based on a detection result of a current flowing through a load, a step of determining a switching frequency of the converter circuit according to the operation state, and a step of specifying a regulation clear frequency region, which is a frequency region that satisfies a noise regulation, in which in the step of determining the switching frequency, the switching frequency is determined to a frequency at which a reactor loss is minimized among frequencies belonging to the regulation clear frequency region in a case where the operation state is the high-load operation.
(6) In a sixth aspect, a program causing a computer of a converter device that converts an electric power from an alternating power supply into a direct current power through a converter circuit, to execute a step of determining whether an operation state is a low-load operation or a high-load operation based on a detection result of a current flowing through a load, a step of determining a switching frequency of the converter circuit according to the operation state, and a step of specifying a regulation clear frequency region, which is a frequency region that satisfies a noise regulation, in which in the step of determining the switching frequency, the switching frequency is determined to a frequency at which a reactor loss is minimized among frequencies belonging to the regulation clear frequency region in a case where the operation state is the high-load operation.

### Industrial Applicability

According to the present disclosure, there is provided a converter device capable of operating a converter circuit at an optimum switching frequency from viewpoints of both a noise regulation and a reactor temperature rise, an air conditioner, a method for controlling the converter device and a program.

### Reference Signs List

1: Air conditioner
2: Converter device
20: Converter control unit
21: Rectification circuit
22: Converter circuit
23: Smoothing capacitor
3: Zero-cross detection unit
4: Load
P: Alternating power supply

## Claims

1. A converter device that converts an electric power from an alternating power supply into a direct current power through a converter circuit, the converter device comprising:
a load determination unit that determines whether an operation state is a low-load operation or a high-load operation based on a detection result of a current flowing through a load;
a frequency determination unit that determines a switching frequency of the converter circuit according to the operation state; and
a region specifying unit that specifies a regulation clear frequency region, which is a frequency region that satisfies a noise regulation,
wherein the frequency determination unit determines the switching frequency to a frequency at which a reactor loss is minimized among frequencies belonging to the regulation clear frequency region in a case where the operation state is the high-load operation.

2. The converter device according to claim 1,
wherein the frequency determination unit determines the switching frequency to a frequency at which a sum of the reactor loss and a switching loss is minimized in a case where the operation state is the low-load operation.

3. The converter device according to claim 1 or 2,
wherein the region specifying unit specifies the regulation clear frequency region according to a magnitude of the load.

4. An air conditioner comprising:
the converter device according to any one of the claims 1 to 3.

5. A method for controlling a converter device that converts an electric power from an alternating power supply into a direct current power through a converter circuit, the method comprising:
a step of determining whether an operation state is a low-load operation or a high-load operation based on a detection result of a current flowing through a load;
a step of determining a switching frequency of the converter circuit according to the operation state; and
a step of specifying a regulation clear frequency region, which is a frequency region that satisfies a noise regulation,
wherein in the step of determining the switching frequency, the switching frequency is determined to a frequency at which a reactor loss is minimized among frequencies belonging to the regulation clear frequency region in a case where the operation state is the high-load operation.

6. A program causing a computer of a converter device that converts an electric power from an alternating power supply into a direct current power through a converter circuit, to execute:
a step of determining whether an operation state is a low-load operation or a high-load operation based on a detection result of a current flowing through a load;
a step of determining a switching frequency of the converter circuit according to the operation state; and
a step of specifying a regulation clear frequency region, which is a frequency region that satisfies a noise regulation,
wherein in the step of determining the switching frequency, the switching frequency is determined to a frequency at which a reactor loss is minimized among frequencies belonging to the regulation clear frequency region in a case where the operation state is the high-load operation.
